# EUROPÄISCHE PATENTSCHRIFT

(11) **EP 2 009 463 B1**
(45) Veröffentlichungstag und Bekanntmachung des Hinweises auf die Patenterteilung: **24.04.2013**
(21) Anmeldenummer: 08010566.1
(22) Anmeldetag: 11.06.2008
(51) Int. Cl.: G01S 13/58, F41A 17/08, F41G 3/14, F41H 11/02, F42C 15/42, F41G 7/22

(54) **Sicherheitsvorrichtung für ein automatisches Selbstschutzsystem**
Safety device for an automatic self-protection system
Dispositif de sécurité pour un système d'autoprotection automatique

(30) Priorität: 21.06.2007 DE 102007028677
(43) Veröffentlichungstag der Anmeldung: 31.12.2008
(73) Patentinhaber: Diehl BGT Defence GmbH & Co. KG, 88662 Überlingen (DE)
(72) Erfinder: Regensburger, Martin, 92318 Neumarkt (DE); Koch, Volker, 90607 Rückersdorf (DE)
(74) Vertreter: Diehl Patentabteilung

(56) Entgegenhaltungen:
- EP-A- 0 707 220
- EP-A- 1 043 601
- US-A- 5 661 254
- US-A- 5 917 442
- US-B1- 6 782 793

## Beschreibung

Die Erfindung betrifft eine Sicherheitsvorrichtung für ein automatisches Selbstschutzsystem gemäß dem Oberbegriff des Anspruches 1. Eine solche Sicherheitsvorrichtung ist aus der US 6,782,793 B1 bekannt.

Ferner ist aus der EP 1 043 601 A2 ein Radarverfahren zur Messung von Abständen und Relativgeschwindigkeiten zwischen einem Fahrzeug und einem oder mehreren Hindernissen bekannt. Außerdem beschreibt die EP 0 707 220 A2 ein Radarmodul mit einem planaren Antennen-Array, welches über eine Signalverzögerungseinheit mit einer Sende-/Empfangseinrichtung verbunden ist.

Bislang ist nicht klar definiert, wie die Systemsicherheit eines abstandswirksamen Schutzsystemes - nachfolgend AWiSS genannt - sichergestellt werden kann, wobei das Erfordernis besteht, für das AWiSS eine Zulassung zu bekommen. Hierfür ist ein Nachweis erforderlich.

Die bislang bekannten Ansätze zum Nachweis der Systemsicherheit eines AWiSS gehen davon aus, dass die Systemsicherheit innerhalb der Feuerleit-Software, d. h. im Feuerleitrechner, realisiert wird. Dabei soll durch die Auswertung der von Radar-Dopplersignalen gelieferten Zieldaten und einer daraus resultierenden Flugbahn zwischen Echt- und Falschzielen unterschieden werden. Radar-Dopplersignale sind nämlich eine zuverlässige Möglichkeit, Zielobjekte bezüglich ihrer Relativgeschwindigkeit zu klassifizieren. Eine Sicherheitsschaltung des AWiSS wertet die Radarsignale aus, ob die für eine Bedrohung typischen Dopplerfrequenzen vorliegen. Nur wenn eine Bedrohung detektiert wird, werden die sicherheitsrelevanten Systemkomponenten des AWiSS aktiviert.

Der Erfindung liegt die Aufgabe zugrunde, eine Sicherheitsvorrichtung der eingangs genannten Art zu schaffen, wobei der Nachweis der Systemsicherheit der Sicherheitsvorrichtung mit vergleichsweise einfachen Mitteln realisierbar ist, um eine Zulassung für das AWiSS zu erhalten.

Diese Aufgabe wird erfindungsgemäß durch die Merkmale des Anspruches 1 gelöst. Bevorzugte Aus- bzw. Weiterbildungen der erfindungsgemäßen Sicherheitsvorrichtung sind in den Unteransprüchen gekennzeichnet.

Die erfindungemäße Sicherheitsvorrichtung weist den Vorteil auf, dass die Realisierung der Systemsicherheit von den Aufgaben der Feuerleitung, die in der Erreichung einer hohen Trefferwahrscheinlichkeit besteht, getrennt ist.

Durch die Verwendung einer möglichst nur aus Hartware bestehenden Sicherheitsvorrichtung werden parallel zum Rechnersystem der Feuerleitung die Radar-Rohdaten, d. h. die Radar-Dopplersignale, ausgewertet, um zu detektieren, ob sich ein Objekt mit der Geschwindigkeit eines realen Zieles im Gesichtsfeld des Radars befindet.

Nur wenn durch die Sicherungsvorrichtung ein entsprechendes Objekt detektiert wird, werden die Zündkreise des AWiSS freigegeben, so dass bspw. ein Abwehrgranate abgeschossen werden kann.

Erfindungsgemäß wird die Systemsicherheit also durch eine möglichst nur aus Hartware bestehende Sicherheitsschaltung realisiert.

Bei den bislang bekannten Lösungsansätzen ist demgegenüber die komplette Systemsoftware - von der Radar-Empfangseinrichtung über die Feuerleitung bis hin zur Generierung des Abschuss-Signals - als sicherheitskritische Software zu realisieren. Dabei bedeutet die Erstellung und Qualifizierung der Software einen wesentlich höheren, d. h. um Faktoren größeren Entwicklungsaufwand. Außerdem fällt bei jeder Änderung der Software während des Produkt-Lebenszyklus der Qualifizierungs-Aufwand wiederholt an.

Demgegenüber ist erfindungsgemäß in vorteilhafter Weise eine strikte Trennung zwischen der System-Sicherheitsfunktion, d. h. der Schussfreigabe, und der Aufgabe der Feuerleitung, d. h. der Schussrichtung und des Schusszeitpunktes, gegeben. Nur wenn durch die Sicherheitsschaltung eine Schussfreigabe erfolgt, kann erfindungsgemäß durch den Systemrechner der Feuerleitung eine Gegenmaßnahme eingeleitet werden. Erfindungsgemäß erfolgt somit erst dann eine Scharfschaltung, wenn von der Sicherheitsschaltung eine Bedrohung detektiert wird und eine Schussfreigabe erfolgt.

Weitere Einzelheiten, Merkmale und Vorteile ergeben sich aus der nachfolgenden Beschreibung der erfindungsgemäßen Sicherheitsvorrichtung in Verbindung mit den anliegenden Zeichnungen.

Es zeigen:
- Fig. 1: eine Blockdarstellung einer ersten Ausführungsform der Sicherheitsvorrichtung, und
- Fig. 2: eine Blockdarstellung einer zweiten Ausführungsform der Sicherheitsvorrichtung.

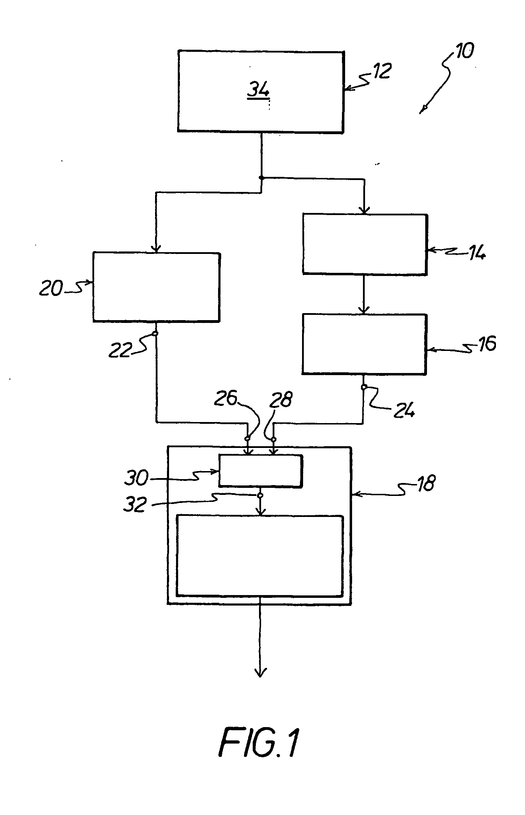

Fig. 1 verdeutlicht schematisch eine Ausführungsform der Sicherheitsvorrichtung 10 für ein automatisches Selbstschutzsystem. Die Sicherheitsvorrichtung 10 weist eine Radar-Empfangseinrichtung 12 auf, die über eine Radar-Signalverarbeitungseinrichtung 14 mit einem abstandswirksamen Schutzsystem AWiSS, d. h. einer Systemsteuerung und Feuerleitung 16, verbunden ist. Die AWiSS 16 ist mit einer Zünd- und Sicherungseinrichtung 18 verbunden.

Zwischen der Radar-Empfangseinrichtung 12 und der Zünd- und Sicherungseinrichtung 18 ist zur Radar-Signalverarbeitungseinrichtung 14 und dem AWiSS 16 eine Sicherheitsschaltung 20 parallel geschaltet, die zur Auswertung von Radar-Dopplersignalen der Radar-Empfangseinrichtung 12 vorgesehen ist.

Die Sicherheitsschaltung 20 weist einen Ausgang 22 auf, der zur Ausgabe von Bedrohungs-Freigabesignalen vorgesehen ist. Das AWiSS 16 weist einen Ausgang 24 auf, der zur Ausgabe von Zündsignalen vorgesehen ist, die von der Feuerleitung generiert werden. Die Ausgänge 22 und 24 sind mit Eingängen einer UND-Verknüpfung 30 zusammengeschaltet, deren Ausgang 32 an die Zünd- und Sicherungseinrichtung 18 angeschlossen ist. Die UND-Verknüpfung 30 bildet eine Komponente der Zünd- und Sicherheitseinrichtung 18.

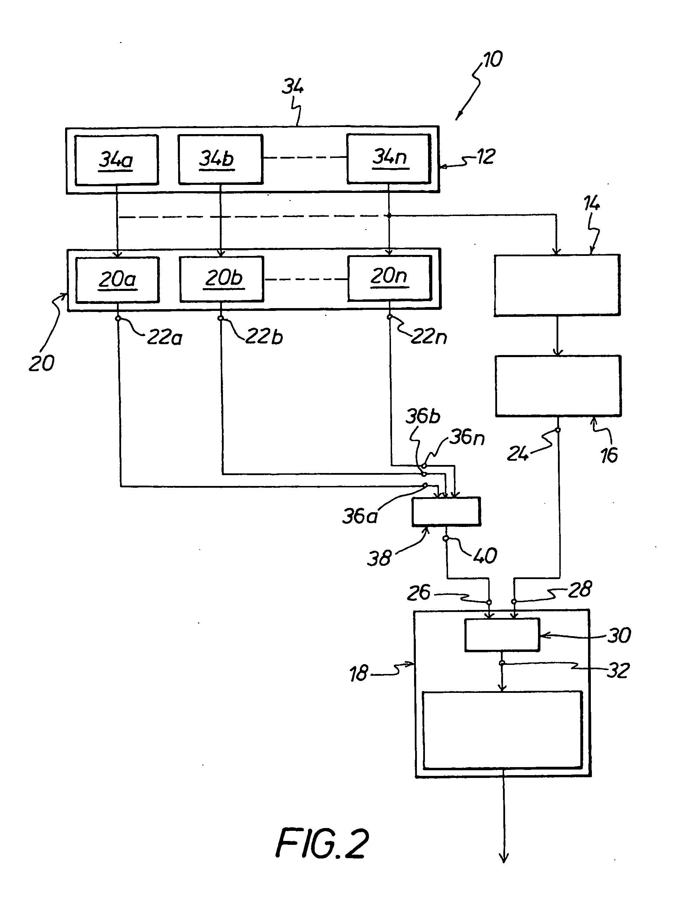

In Fig. 1 ist eine Ausbildung der Sicherheitsvorrichtung 10 schematisch in einer Blockdarstellung verdeutlicht, wobei die Radar-Empfangseinrichtung 12 einen einzigen Radar-Empfangsmodul 34 aufweist. Demgegenüber verdeutlicht die Fig. 2 eine Ausbildung der Sicherheitsvorrichtung 10, bei welcher die Radar-Empfangseinrichtung 12 eine Anzahl Radar-Empfangmodule 34a, 34b, .... 34n aufweist. Der/jeder Radar-Empfangsmodul weist zwei Radarfrequenzen auf, von welchen eine fest und die zweite zur Entfernungsmessung umschaltbar ist. Jeder Radar-Empfangsmodul 34a, 34b, .... 34n ist mit einer zugehörigen Sicherheitsschaltung 20a, 20b, .... 20n zusammengeschaltet. Die Sicherheitsschaltungen 20a, 20b, .... 20n weisen Ausgänge 22a, 22b, .... 22n auf, die mit den Eingängen 36a, 36b, .... 36n einer ODER-Verknüpfung 38 zusammengeschaltet sind. Die ODER-Verknüpfung 38 weist einen Ausgang 40 auf, der an den Eingang 26 der UND-Verknüpfung 30 der Zünd- und Sicherungseinrichtung 18 angeschlossen ist.

Mit der Bezugsziffer 14 ist auch in Fig. 2 die Radar-Signalverarbeitungseinrichtung und mit der Bezugsziffer 16 das AWiSS der Sicherheitsvorrichtung 10 bezeichnet.

Die Funktionsweise der Sicherheitsvorrichtung 10 ist wie folgt:

Die Radar-Rohdaten, d. h. die Radar-Dopplersignale, werden parallel zur Feuerleitung durch die Sicherheitsschaltung 20 ausgewertet. Wird ein Dopplersignal detektiert, das einem vorgegebenen Ziel spektrum entspricht, so wird durch die Sicherheitsschaltung 20 am Ausgang 22 ein Freigabesignal generiert. Durch die Zünd- und Sicherungseinrichtung 18 wird eine UND-Verknüpfung 30 zwischen der Schussfreigabe - Sicherheitsschaltung 20 - und dem am Ausgang 24 anstehenden Zündsignal der Feuerleitung hergestellt. Über die Feuerleitung kann somit nur dann ein Schuss abgegeben werden, wenn vorher durch die Sicherheitsschaltung 20 eine Schussfreigabe erfolgt.

Die UND-Verknüpfung 30 der Zünd- und Sicherungseinrichtung 18 deaktiviert alle Zündkreise, indem diese energiefrei geschaltet werden, solange am Ausgang 22 kein Freigabesignal vorliegt.

Das für das AWiSS 16 vorgesehene Radar verwendet pro Radar-Empfangsmodul 34a, 34b, .... 34n zwei Radarfrequenzen, wobei eine der beiden Frequenzen fest und die zweite Frequenz zwecks Entfernungsmessung umschaltbar ist - wie bereits erwähnt worden ist. Für die Sicherheitsvorrichtung 10 vorteilhaft ist die Verwendung von zwei Frequenzen, weil durch eine unabhängige Auswertung der beiden Frequenzen die Zuverlässigkeit der Sicherheitsvorrichtung 10 weiter verbessert wird.

Das für das AWiSS vorgesehene Radar verwendet pro Radar-Empfangsmodul 34a, 34b, .... 34n in vorteilhafter Weise vier Empfangselemente, die als Quadranten angeordnet sind. Nach jedem der vier Empfangselemente werden die empfangenen Radarsignale mit den Sendefrequenzen zweckmäßigerweise mit Hilfe von Mischern in den Videobereich gemischt. Die Signale nach den Mischern der Empfangselemente werden als Radar-Rohsignale bezeichnet, wobei das jeweilige Radar-Empfangselement vorzugsweise vier Radar-Rohsignale generiert, nämlich:
Frequenz 1 I-Kanal (Inphase),
Frequenz 1 Q-Kanal (Quadraturphase),
Frequenz 2 I-Kanal (Inphase), und
Frequenz 2 Q-Kanal (Quadraturphase).

Jedes Radar-Empfangsmodul 34a, 34b, .... 34n liefert somit sechzehn analoge Rohsignale, die von der Sicherheitsschaltung 20 ausgewertet werden können. Wie viele der Rohsignale durch die Sicherheitsschaltung 20 ausgewertet werden, ist wunschgemäß festlegbar. Die Anzahl der ausgewerteten Radar-Rohsignale steigert die Zuverlässigkeit der Sicherheitsvorrichtung 10.

Um den Forderungen bezüglich Sicherheit nachzukommen, müssen mindestens zwei der Radarkanäle ausgewertet werden. D. h. von der Sicherheitsschaltung 20 werden mindestens zwei der analogen Radarkanäle bezüglich vorhandener Dopplerfrequenzen analysiert.

Zur Ermittlung der Dopplerfrequenzen können verschiedene, an sich bekannte Auswerteverfahren zur Anwendung gelangen. Bspw. kann die Auswertung der Schaltung Filterbänke oder eine FFT (= Fast Fourier Transformation) mittels FPGA aufweisen (- bei der FPGA handelt es sich um ein EPROM, d. h. eine hartware-mäßig eingebrannte Software). Die spezielle Art der Signalverarbeitung ist erfindungsgemäß nicht relevant, es sollte jedoch darauf geachtet werden, dass möglichst keine Prozessoren eingesetzt werden, weil bei der Verwendung von Prozessoren und einer zugehörigen Software eine aufwendigere Qualifikation erforderlich ist.

Wird von der Sicherheitsvorrichtung 10 ein Objekt mit einer vorgegebenen Geschwindigkeit (Dopplerfrequenz) detektiert, so werden über die Zünd- und Sicherheitseinrichtung 18 die Zündleitungen freigeben, so dass das Feuerleitsystem bspw. eine Abwehrgranate abfeuern kann. Dabei ist darauf zu achten, dass für eine Freigabe zwei unabhängige Freigabesignale, d. h. eine Freigabe über zwei getrennte Kanäle vorliegen muss.

So lange keine Objekte mit vorgegebener Geschwindigkeit (Dopplerfrequenz) detektiert werden, verriegelt die Zünd- und Sicherheitseinrichtung 18 alle sicherheitsrelevanten Signale, so dass bei der erfindungsgemäßen Sicherheitsvorrichtung 10 die Systemsicherheit unabhängig vom Feuerleitsystem gewährleistet ist. Die Systemsicherheit kann folglich ohne Berücksichtigung des Feuerleitsystemes sichergestellt werden, so dass in vorteilhafter Weise eine aufwendige Qualifikation der Software entfallen kann.

Erfindungsgemäß kann die Auswerteschaltung auch einen Mikrocontroller aufweisen, d. h. es ist auch eine Auswertung der Radar-Rohdaten durch einen Mikrocontroller möglich. Eine derartige softwaremäßige Lösung bedeutet zwar, dass die Qualifikation aufwendiger ist; die hierzu benötigte Software ist jedoch in vorteilhafter Weise von einer deutlich geringeren Komplexität, so dass der Qualifikationsaufwand immer noch deutlich geringer ist, als wenn eine Qualifikation der kompletten Feuerleit-Software durchgeführt werden müsste.

Die Fig. 2 verdeutlicht eine Ausbildung der Sicherheitsvorrichtung 10, bestehend aus einer Anzahl Radar-Empfangsmodule 34a, 34b, .... 34n, wobei jedem Radar-Empfangsmodul eine Sicherheitsschaltung 20a, 20b, .... 20n zugeordnet ist. Nach jedem Radar-Empfangsmodul müssen mindestens zwei Kanäle ausgewertet werden. Eine Freigabe der Zünd- und Sicherungseinrichtung 18 soll erfolgen, wenn sich eine Bedrohung in einem der Radar-Empfangsmodule befindet. Die Freigabesignale der verschiedenen Radar-Empfangsmodule 34a, 34, .... 34n sind deshalb als ODER-Verknüpfung 38 realisiert.

Ein zentraler Aspekt der vorliegenden Erfindung ist also die Trennung der Feuerleitrechnung von der Systemsicherheit.

Die Feuerleitrechnung (FLR), also die Funktionseinheit (erster Funktionsblock), welche die sog. Feuerleitlösung berechnet, ist für den gesamten komplexen technischen Bereich der Spurbildung (also folgende Problematik: das anfliegende Geschoss ist zum Zeitpunkt t₀ an Punkt X → an welchem Punkt Y wird es zum Zeitpunkt t₁ sein) und der Berechnung des Begegnungspunktes des Abfanggeschosses mit dem anfliegenden Geschoss (= reales Ziel) zuständig.

Die FLR, hier also das AWiSS, ist in der Regel ständig aktiv: Ständig werden automatisch sich bewegende Objekte im Erfassungsraum vermessen und auch Daten für Abfangmanöver berechnet, ohne dass jedoch tatsächlich eine Gegenmaßnahme eingeleitet wird.

Erst wenn vom zweiten Funktionsblock, der Systemsicherheit, die Freigabe kommt, kann das System überhaupt erst tatsächlich eine Gegenmaßnahme einleiten. Diese Systemsicherheit kann im einfachsten Fall ein Knopf sein, auf den der menschliche Bediener des Systems drückt. Ab diesem Zeitpunkt ist das System "scharf", d. h. die Zündkondensatoren des Systems werden geladen und das System ist generell in den Zustand versetzt, eine Gegenmaßnahme einzuleiten.

Damit besteht jedoch prinzipiell die Gefahr, dass das System auch Ziele bekämpft, die es nicht bekämpfen sollte (also z. B. zivile Gegenstände wie PKWs, geworfene Gegenstände etc.). Im Stand der Technik übernimmt die Ziel-Diskriminierung der Mensch, der dem System sagt, was ein reales Ziel ist und was nicht (indem der nämlich bei positiver Entscheidung auf den Auslöseknopf drückt und das System die Gegenmaßnahme einleitet). Generell ist das System aber nach der "Scharfstellung" in einem unsicheren Zustand, denn das ständig Gegenmaßnahmen berechnende System wird nur noch an einem von einem Menschen gehaltenen Zügel gehalten.

Ein Ziel der Erfindung ist es nun, "das entsicherte System zu sichern", d. h. irgendwie zu verhindern, dass das System auf ein nicht-reales Ziel feuert.

Erfindungsgemäß wird dabei die Zielunterscheidung, welche direkt von den Rohsignalen der Radar- und Dopplersensoren gespeist wird, zur Sicherung verwendet. Das bedeutet, dass die Sicherheitsschaltung anhand der Rohdaten erst mal nur entscheidet: es handelt sich um eine reales Ziel (z. B. weil es schnell genug fliegt), also völlig unspezifisch ohne Berechnung der Flugbahn des Geschosses. Daraufhin gibt die Sicherheitsschaltung generell Feuerfreigabe. Das bedeutet aber nicht automatisch, dass das System auch wirklich feuert, denn die FLR kann z. B. berechnen, dass das herannahende Objekt vorbeifliegt und eine Gegenmaßnahme gar nicht notwendig ist. Nur wenn die ständig aktive FLR durch ständige Spurberechnung eine Gegenmaßnahme für nötig hält, gibt sie ihrerseits Feuerbefehl (UND-Verknüpfung) und die Gegenmaßnahme wird tatsächlich eingeleitet.

Der Feuerbefehl der FLR führt jedoch nur dann zum Gegenschuss, wenn die Sicherheitsschaltung die Feuerfreigabe gegeben hat. Letztlich müssen also UNDverknüpft die beiden Signale der Sicherheitsschaltung und der FLR zusammenkommen, dass die Gegenmaßnahme eingeleitet wird.

Beide Systemkomponenten, also die FLR und die Sicherheitsschaltung, werden von den Rohdaten der Radar- und Dopplersensoren gespeist, aber während die FLR daraus die Spurdaten des anfliegenden Geschosses berechnet und (hypothetische) Gegenmaßnahmen berechnet, stellt die Sicherheitsschaltung anhand derselben Daten nur fest, ob es sich generell überhaupt um ein reales Ziel handelt (z. B. weil es schnell genug ist, ein von Hand geworfener Gegenstand fliegt in der Regel nicht schnell genug und wird sozusagen als nicht-reales Ziel aussortiert).

Die Funktion der Sicherheitsschaltung ist somit aus der reinen FLR herausgenommen und von ihr getrennt. Dadurch kann die FLR modifiziert werden, ohne dass sie neu qualifiziert werden muss, denn die Sicherheitsschaltung bleibt ja unverändert.

### Bezugsziffernliste:

- 10: Sicherheitsvorrichtung
- 12: Radar-Empfangseinrichtung (von 10)
- 14: Radar-Signalverarbeitungseinrichtung (von 10)
- 16: AWiSS (von 10)
- 18: Zünd- und Sicherungseinrichtung (von 10)
- 20: Sicherheitsschaltung (von 10)
- 22: Ausgang (von 20)
- 24: Ausgang (von 16)
- 26: Eingang (von 30)
- 28: Eingang (von 30)
- 30: UND-Verknüpfung (von 18)
- 32: Ausgang (von 30)
- 34: Radar-Empfangsmodul (von 12)
- 36: Eingang (von 38)
- 38: ODER-Verknüpfung (von 10)
- 40: Ausgang (von 38)

## Patentansprüche

1. Sicherheitsvorrichtung für ein automatisches Selbstschutzsystem mit einer Radar-Empfangseinrichtung (12), die über eine Radar-Signalverarbeitungseinrichtung (14) mit einem abstandswirksamen Schutzsystem (AWiSS) (16) zur Durchführung einer Gegenmaßnahme gegen eine Bedrohung verbunden ist, welches mit einer Zünd- und Sicherungseinrichtung (18) verbunden ist, wobei die Radar-Signalverarbeitungseinrichtung (14) eingerichtet ist, von der Radar-Empfangseinrichtung (12) erhaltene Radar-Dopplersignale zu verarbeiten und dem Feuerleitrechner des AWiSS (16) als Grundlage zur Berechnung einer Feuerleitlösung zur Verfügung zu stellen,
**dadurch gekennzeichnet,**
**dass** der Feuerleitrechner anhand der aus den Rohdaten der Radar-Dopplersignale ermittelten Spurdaten eines anfliegenden Objektes berechnet, ob das herannahende Objekt vorbeifliegt und daher eine Gegenmaßnahme nicht notwendig ist und außerdem zwischen der Radar-Empfangseinrichtung (12) und der Zünd- und Sicherungseinrichtung (18) zur Radar-Signalverarbeitungseinrichtung (14) und dem AWiSS (16) eine die Radar-Dopplersignale auswertende Sicherheitsschaltung (20) parallel geschaltet ist, wobei der Ausgang (22) der Sicherheitsschaltung (20) und der Ausgang (24) des AWiSS (16) mit den Eingängen (26, 28) einer UND-Verknüpfung (30) zusammengeschaltet sind, deren Signalausgabe am Ausgang (32) der Zünd- und Sicherungseinrichtung (18) nur dann eine Freigabe der Zünd- und Sicherungseinrichtung (18) bewirkt und damit die Durchführung einer Gegenmaßnahme mittels Ausgabe eines Zündsignals am Ausgang (24) des AWiSS (16) ermöglicht, wenn am Ausgang (22) der Sicherheitsschaltung (20) ein Freigabesignal ausgegeben wird, wobei das Freigabesignal nur dann ausgegeben wird, wenn die Sicherheitsschaltung (20) aufgrund der Auswertung der Radar-Dopplersignale getrennt von den Berechnungen des Feuerleitrechners des AWiSS (16) festgestellt hat, dass das Objekt, von dem die Radar-Dopplersignale empfangen werden, eine vorgegebene Mindestgeschwindigkeit aufweist.

2. Sicherheitsvorrichtung nach Anspruch 1,
**dadurch gekennzeichnet,**
**dass** die Radar-Empfangseinrichtung (12) mindestens ein Radar-Empfangsmodul (34; 34a, 34b, ... 34n) aufweist.

3. Sicherheitsvorrichtung nach Anspruch 1 oder 2,
**dadurch gekennzeichnet,**
**dass** der/jeder Radar-Empfangsmodul (34; 34a, 34b, ... 34n) zwei Radar-Frequenzen aufweist, von welchen die eine fest und die zweite zur Entfernungsmessung umschaltbar ist.

4. Sicherheitsvorrichtung nach einem der Ansprüche 1 bis 3,
**dadurch gekennzeichnet,**
**dass** der/jeder Radar- Empfangsmodul (34; 34a, 34b, ... 34n) vier als Quadranten angeordnete Empfangselemente aufweist.

5. Sicherheitsvorrichtung nach Anspruch 4,
**dadurch gekennzeichnet,**
**dass** eine Mischeinrichtung vorgesehen ist, in der die von den Empfangsmodulen (34a, 34b, ... 34n) empfangenen Signale mit den Sendefrequenzen in einen Videobereich gemischt werden.

6. Sicherheitsvorrichtung nach Anspruch 4,
**dadurch gekennzeichnet,**
**dass** jedes Empfangselement vier Radar-Rohsignale generiert, so dass der/jeder Radar-Empfangsmodul (34; 34a, 34b, ... 34n) sechzehn analoge Radar-Rohsignale erzeugt.

7. Sicherheitsvorrichtung nach einem der Ansprüche 1 bis 6,
**dadurch gekennzeichnet,**
**dass** zur Auswertung der Radar-Dopplersignale eine Auswerteschaltung vorgesehen ist.

8. Sicherheitsvorrichtung nach Anspruch 7,
**dadurch gekennzeichnet,**
**dass** die Auswerteschaltung Filterbänke aufweist.

9. Sicherheitsvorrichtung nach Anspruch 7,
**dadurch gekennzeichnet,**
**dass** die Auswerteschaltung eine FFT (Fast Fourier Transformation) mittels FPGA aufweist.

10. Sicherheitsvorrichtung nach Anspruch 7,
**dadurch gekennzeichnet,**
**dass** die Auswerteschaltung einen Mikrokontroller aufweist.

11. Sicherheitsvorrichtung nach einem der Ansprüche 1 bis 10,
**dadurch gekennzeichnet,**
**dass** die die Radar-Dopplersignale auswertende Sicherheitsschaltung (20) eine der Anzahl Radar-Empfangsmodule (34a, 34b, ... 34n) entsprechende Anzahl Sicherheitsschaltungen (20a, 20b, ... 20n) mit jeweils zugehöriger Auswerteschaltung aufweist.

12. Sicherheitsvorrichtung nach Anspruch 11,
**dadurch gekennzeichnet,**
**dass** die Ausgänge (22a, 22b, ... 22n) der Sicherheitsschaltungen (20a, 20b, ... 20n) mit den Eingängen (36a, 36b, ... 36n) einer ODER-Verknüpfung (38) zusammengeschaltet sind, deren Ausgang (40) an die Zünd- und Sicherungseinrichtung (18) angeschlossen ist.

## Claims

1. Safety device for an automatic self-protection system having a radar reception device (12), which is connected via a radar signal processing device (14) to an active stand-off protection system (AWiSS) (16) for carrying out a countermeasure against a threat, which is connected to an ignition and protection device (18), wherein the radar signal processing device (14) is arranged so as to process radar Doppler signals received by the radar reception device (12) and to provide the same to the fire control computer of the AWiSS (16) as a basis for calculation of a fire control solution,
**characterized in that**
the fire control computer, using the track data of an approaching object determined from the raw data of the radar Doppler signals, calculates whether the approaching object is flying past and therefore that a countermeasure is unnecessary, and moreover a safety circuit (20) that evaluates the radar Doppler signals is connected in parallel with the radar signal processing device (14) and the AWiSS (16) between the radar receiving device (12) and the ignition and safety device (18), wherein the output (22) of the safety circuit (20) and the output (24) of the AWiSS (16) are interconnected with the inputs (26, 28) of an AND gate (30), whose signal output at the output (32) of the ignition and safety device (18) only causes enabling of the ignition and safety device (18), and thus enables the application of a countermeasure by outputting an ignition signal at the output (24) of the AWiSS (16), if an enabling signal is output at the output (22) of the safety circuit (20), wherein the enabling signal is only output if the safety circuit (20) has determined that the object from which the radar Doppler signals are received has a specified minimum speed based on the evaluation of the radar Doppler signals separately from the calculations of the fire control computer of the AWiSS (16).

2. Safety device according to Claim 1,
**characterized in that**
the radar reception device (12) comprises at least one radar receiving module (34; 34a, 34b, ... 34n).

3. Safety device according to Claim 1 or 2,
**characterized in that**
the/each radar receiving module (34; 34a, 34b, ... 34n) has two radar frequencies, of which one is fixed and the second can be switched for distance measurement.

4. Safety device according to any one of Claims 1 through 3,
**characterized in that**
the/each radar receiving module (34; 34a, 34b, ... 34n) comprises four receiving elements disposed as quadrants.

5. Safety device according to Claim 4,
**characterized in that**
a mixing device is provided, in which the signals received from the receiving modules (34a, 34b, ... 34n) are mixed with the transmission frequencies in a video range.

6. Safety device according to Claim 4, **characterized in that** each receiving element generates four raw radar signals, so that the/each radar receiving module (34; 34a, 34b, ... 34n) generates sixteen analogue raw radar signals.

7. Safety device according to any one of Claims 1 through 6,
**characterized in that**
an evaluation circuit is provided for the evaluation of the radar Doppler signals.

8. Safety device according to Claim 7,
**characterized in that**
the evaluation circuit comprises filter banks.

9. Safety device according to Claim 7,
**characterized in that**
the evaluation circuit comprises an FFT (Fast Fourier Transformation) by means of FPGA.

10. Safety device according to Claim 7,
**characterized in that**
the evaluation circuit comprises a microcontroller.

11. Safety device according to any one of Claims 1 through 10,
**characterized in that**
the safety circuit (20) evaluating the radar Doppler signals comprises a number of safety circuits (20a, 20b, ... 20n) corresponding to the number of radar receiving modules (34a, 34b, ... 34n), each having an associated evaluation circuit.

12. Safety device according to Claim 11,
**characterized in that**
the outputs (22a, 22b, ... 22n) of the safety circuits (20a, 20b, ... 20n) are interconnected with the inputs (36a, 36b, ... 36n) of an OR gate (38), whose output (40) is connected to the ignition and safety device (18).

## Revendications

1. Dispositif de sécurité destiné à un système d'autoprotection automatique comprenant un dispositif de réception radar (12) qui est connecté par l'intermédiaire d'un dispositif de traitement de signaux radar (14) à un système de protection à effet de distance (AWiSS) (16) pour mettre en oeuvre une contremesure contre une menace, lequel système est connecté à un dispositif d'allumage et de sécurité (18) dans lequel le dispositif de traitement de signaux radar (14) est conçu pour traiter des signaux radar Doppler obtenus par le dispositif de réception radar (12) et pour les fournir au calculateur de tir du système AWiSS (16) en tant que base pour le calcul d'une solution de commande de tir, **caractérisé en ce que** le calculateur de commande de tir calcule, sur la base des données de poursuite d'un objet en approche obtenues à partir des données brutes des signaux radar Doppler, si l'objet en approche effectue un passage et par conséquent si aucune contremesure n'est nécessaire, et **en ce qu'**en outre, entre le dispositif de réception radar (12) et le dispositif d'allumage et de sécurité (18), un circuit de sécurité (20) évaluant les signaux radar Doppler est connecté en parallèle avec le dispositif de traitement de signaux radar (14) et avec le système AWiSS (16), dans lequel la sortie (22) du circuit de sécurité (20) et la sortie (24) du système AWiSS (16) sont appliquées en commun aux entrées (26, 28) d'une porte ET (30) dont la sortie de signal, à la sortie (32) du dispositif d'allumage et de sécurité (18), ne produit un déclenchement du dispositif d'allumage et de sécurité (18) et par conséquent, la mise en oeuvre d'une contremesure par fourniture en sortie d'un signal d'allumage à la sortie (24) du système AWiSS (16) que lorsqu'un signal de déclenchement est délivré à la sortie (22) du circuit de sécurité (20), le signal de déclenchement n'étant délivré que lorsque le circuit de sécurité (20) a établi sur la base de l'évaluation des signaux radar Doppler et séparément des calculs effectués par le calculateur de commande de tir du système AWiSS (16), en provenance duquel les signaux radar Doppler ont été reçus, que l'objet présente une vitesse minimale prédéterminée.

2. Dispositif de sécurité selon la revendication 1, **caractérisé en ce que** le dispositif de réception radar (12) comprend au moins un module de réception radar (34 ; 34a, 34b, ... 34n).

3. Dispositif de sécurité selon la revendication 1 ou 2, **caractérisé en ce que** le/chaque module de réception radar (34 ; 34a, 34b, ... 34n) comprend deux fréquences radar dont l'une est fixe et dont la seconde peut être commutée pour la mesure de distance.

4. Dispositif de sécurité selon l'une quelconque des revendications 1 à 3, **caractérisé en ce que** le/chaque module de réception radar (34 ; 34a, 34b, ... 34n) comprend quatre éléments de réception disposés sous la forme de quadrants.

5. Dispositif de sécurité selon la revendication 4, **caractérisé en ce qu'**il est prévu un dispositif de mélange dans lequel les signaux reçus par les modules de réception (34a, 34b, ... 34n) sont mélangés aux fréquences d'émission dans un domaine vidéo.

6. Dispositif de sécurité selon la revendication 4, **caractérisé en ce que** l'élément de réception génère quatre signaux radar bruts, de sorte que le/chaque module de réception radar (34 ; 34a, 34b, ... 34n) génère seize signaux radar bruts analogiques.

7. Dispositif de sécurité selon l'une quelconque des revendications 1 à 6, **caractérisé en ce qu'**il est prévu un circuit d'évaluation pour évaluer les signaux Doppler radar.

8. Dispositif de sécurité selon la revendication 7, **caractérisé en ce que** le circuit d'évaluation comprend des bancs de filtres.

9. Dispositif de sécurité selon la revendication 7, **caractérisé en ce que** le circuit d'évaluation comporte une FFT (Fast Fourier Transformation) au moyen d'un dispositif FPGA.

10. Dispositif de sécurité selon la revendication 7, **caractérisé en ce que** le circuit d'évaluation comprend un microcontrôleur.

11. Dispositif de sécurité selon l'une quelconque des revendications 1 à 10, **caractérisé en ce que** le circuit de sécurité (20) évaluant les signaux radar Doppler comprend un nombre de circuits de sécurité (20a, 20b, ... 20n) correspondant au nombre de modules de réception radar (34a, 34b, ... 34n) comportant chacun un circuit d'évaluation correspondant.

12. Dispositif de sécurité selon la revendication 11, **caractérisé en ce que** les sorties (22a, 22b, ... 22n) des circuits de sécurité (20a, 20b, ... 20n) sont connectées en commun aux entrées (36a, 36b, ... 36n) d'une porte OU (38) dont la sortie (40) est connectée au dispositif d'allumage et de sécurité (18).
